# EUROPEAN PATENT SPECIFICATION

(11) **EP 0 581 987 B1**
(45) Date of publication and mention of the grant of the patent: **16.04.1997**
(21) Application number: 92113305.4
(22) Date of filing: 05.08.1992
(51) Int. Cl.: B60M 1/234, H02G 7/14

(54) **A system to improve the electrical collection by the pantographs of an electromotive train**
System zur Verbesserung der elektrischen Stromabnahme von Pantographen eines elektromotorischen Zuges
Méthode pour améliorer le captage de courant électrique par pantographes d'un train électromoteur

(43) Date of publication of application: 09.02.1994
(73) Proprietor: OFFICINA FRATELLI BERTOLOTTI S.p.A., Volpiano (TO) (IT)
(72) Inventor: Van de Kerchove, Jean A., I-20124 Milano (IT)
(74) Representative: Ferraiolo, Ruggero

(56) References cited:
- EP-A- 0 345 567
- WO-A-86/06560
- GB-A- 918 317
- US-A- 4 854 541

## Description

The present invention concerns a system to improve the electrical collection by the pantographs of an electromotive train.

It is noted that a pantograph on a train is subjected to an upward thrust that is countered by the elasticity of the contact cable and of the carrying cable. This elasticity is variable: it is higher in the middle of the span and lower under the support portal. The movement of the pantograph and said variations in elasticity cause vibrations of the contact line; these vibrations increase in amplitude with the increase in train speed and extend along the contact cable at a speed higher than that of the train itself. Thus a pantograph collects electricity from a contact cable that it has set vibrating itself. This phenomenon is more marked at higher train speeds; in high velocity trains the phenomenon may cause interruptions in the collection that are more than 2.5% of the contact time; said percentage is the recommended limit, because the electric arcs produced when the pantograph is detached from the contact line cause rapid wear of the line and of the pantograph.

There are cases in which it is convenient to feed the motors of an electric train with more than one pantograph, generally two and the disadvantage in the use of two pantographs is given by the fact that the second pantograph meets the contact cable that has already been set vibrating by the first pantograph; so the second pantograph also begins to vibrate, more than the first one, causing interruptions in the collection of electricity and consequent production of electric arcs between the same pantograph and the contact cable. To obviate all this one thought to improve the electricity collection by increasing the thrust of the second pantograph against the contact cable to much more than what was needed for purely achieving a normal collection. The disadvantage of such a solution is that both interruptions in the collection and the increased thrust cause a rapid wear of the contact cable and of the pantograph.

In the case of single-pantograph trains a solution is noted adopted by the Japanese railways on the high-speed Tokaido line in which a "compound" catenary and dampers positioned in the part of the span adjacent to the portals are fitted between the contact cable and the carrying cable, while in the ex Soviet Union the "compound" catenary alone was used extensively.

The disadvantage of both these solutions is that they do not solve the problem of affording good collection for a second pantograph.

Additionally, the following documents may be cited in particular which are comprised in the prior art: EP-A-0 345 567 and WO-A-8 606 560.

The first document discloses a damping device for use on a railway contact conductor formed of a messanger cable clamped at its center to the contact conductor and carrying at its ends springing couter-weights; the construction features and damping mode in this device appear easily very different from the damper claimed in this application; as an example, it is referred herein a problem involving both the vibrating mode and the safety of the device: the messanger cable is made of 19 single wires which may arrive to failure due to fatigue and let the counter-weigths to fall, possibly on a train; in view of that, one might increase the strength of the messanger cable, but this would cause the resonance frequency to change so that to maintain it at the desired value the counter-weights should be increased and so on, without arriving at a solution of the problem; the damper according to the application does not present said vibration modes and safety problems.

The second document discloses a damper for use on a conductor in an overhead electric line; due to its scope, this damper is designed to solve certain vibration problems peculiar with the electric lines: it contains incompressible fluid and inner springs controlling the movement of an inner oscillating weight and is built up in order to damp a relatively wide vibration range, generally from 12 to 40 Hz, which rise in the electric line conductors when they are subject to relatively low velocity winds; the oscillating weight closed into a case makes the ratio "rigidly suspended weight/elastically suspended weight" very unfavourable (the first definition includes a clamp, the fluid, the case, a shaft and one half of a spring-the second definition includes the oscillating weight and one half of the spring); it stems from the above that adopting the right oscillating weight into the case may conflict with designing conveniently the case and the other parts defined as "rigidly suspended weight".

The invention is a system wherein at least a damping means suspended about the middle of the span comprises, as characterized in the claims, a cylindrical case full of a fluid, a piston running within said case, a counter-acting spring within said case, between said piston and a circular wall of said case, a weight fitted to the external end of the rod of said piston , a valve inside said piston so built as to offer different resistances to the through passage of said fluid depending on the piston running towards the head or towards the bottom of said case.

Said means is able to damp vibrations induced by the first pantograph in the contact cable or cables in order to afford satisfactory collection by the second pantograph. In the description these vibrations will simply be defined as -induced vibrations- and for reasons of simplicity only one carrying cable will be named, and so will only one contact cable, well aware that a railway line may have two carrying cables and/or two contact cables, facts that are totally irrelevant relatively to the present invention. The mechanical characteristics of said damping means positioned in each span of an electric railway line are determined to achieve the result of damping the vibrations induced in a lapse of time that goes from the passage of the first pantograph and that of the second pantograph in each point of the contact line.

The mechanical characteristics that these dampers must feature are defined by experiment possibly supported by the theory that takes into account the mechanical characteristics of the span (distance between supports, weight of the carrying cable and of the contact cable, mechanical stress in said contact cable and carrying cable, distance between droppers) and of the train speed and of the thrust of each pantograph.

In the description these damping means will simply be defined as -dampers-.

Obviously the two pantographs are preferably at the longest possible distance from one another and so, that the first pantograph is at the front of the train and the second one at the back.

The main advantage the invention affords are the longer intervals in the replacement of the contact line and in the consequent cut costs for maintenance of an electric railway line used by trains with two pantographs.

One realization of the invention is described in detail below with reference to the drawings that illustrate a specific embodiment and in which
FIG. 1 is a side view of a span,
FIG. 2 is a cross section view of a damper,
Fig. 3A is the diagram of vibrations in a non damped contact cable, and
FIG. 3B is the diagram of vibrations in a damped contact cable.

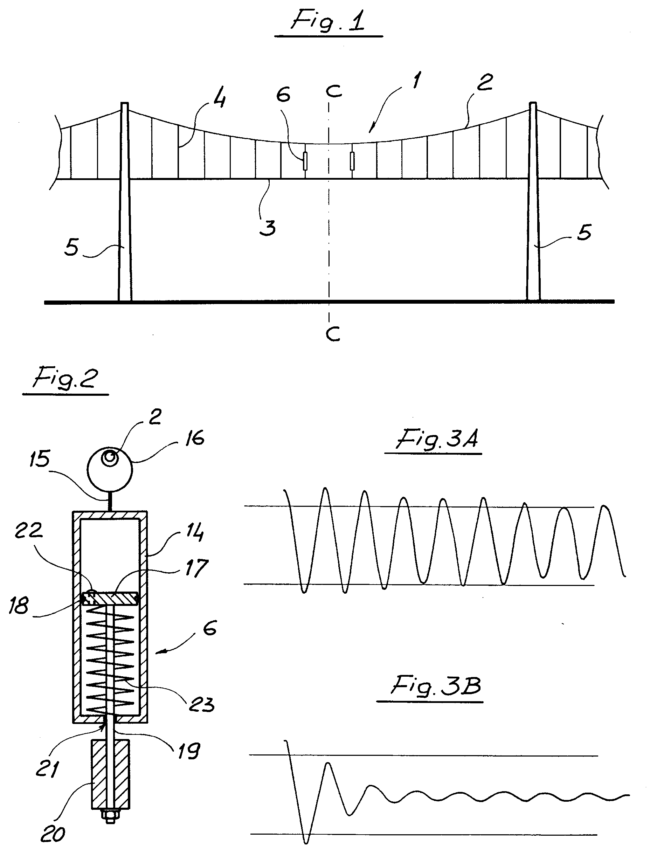

Figure 1 shows a span 1 (distance between two adjacent supports 5) of an electric railway line for high speed trains. On each side of the centre-line C/L of the span, a damper 6 is suspended by a carrying cable 2, and, therefore, is not connected to the contact cable 3; said dampers 6 are together capable of sufficiently damping the induced vibrations along the full length of the span. On both sides of the dampers 6 there is the series of droppers 4 by means of which the carrying cable 2 holds the contact cable 3. The type of damper 6 is illustrated in detail in Figure 2. It is understood that the number of dampers 6 suspended by the carrying cable in the middle part of the span may vary as a function of the mechanical characteristics of the electric railway line.

Figure 2 shows in detail a type 6 damper fitted in the span as shown in Figure 1. This damper comprises a cylindrical case 14 the upper part of which bears a pin 15 that has at its top a clamp 16 to fasten it to the carrying cable 2; the cylindrical case 14 contains a fluid (not shown) and a piston 17 (fitted with an appropriate gasket 18) runs within the case pushed or dragged by rod 19 that carries a weight 20 suspended from its bottom; an aperture 21 on the bottom of case 14 in which the rod slides is fluid tight; a valve 22 is built in such a way as to allow the piston 17 to run towards the head of said case 14 (that is towards the top) very easily and not viceversa so as to reduce the elasticity of the system in a dynamic status, that is in the moments immediately previous to the passage of a pantograph; a counter-acting spiral spring 23 is fitted between the bottom of the cylindrical case 14 and the piston 17 and, together with weight 20, this forms an oscillating system with a frequency sensibly equal to the oscillation frequency of the assembly made up by the carrying cable, the droppers and the contact cable, so that the weight-spring association (20-23) creates a counter-force to the oscillations of said system in order to damp said induced vibrations.

An alternate solution for the damper illustrated in Figure 2 consists in positioning the spring 23 above the piston 17, with the ends of the spring respectively attached to the upper surface of the piston and to the upper inside wall of the cylindrical case 14. In this alternate status the spring works under traction so that the friction between the spring and the walls of the cylindrical case is cut down. In a second alternate solution valve 22 can be built so as to allow the piston 17 to run towards the head of said case 14 encountering high resistance and towards the bottom of the case with low resistance. No figures have been presented for these alternate solutions because they appear easily comprehensible.

In a further alternate solution the valve on the piston of damper 6 can be built so as to have equal resistance in both the directions in which the piston runs.

Figure 3A is an ideal diagram of the vibrations that a first pantograph has induced in a contact cable; one can notice that the amplitude of the vibrations stays the same for a long period of time, far greater (about 3 seconds) than the time taken by the second pantograph to reach the same point touched by the first pantograph.

Figure 3B is an ideal diagram of the vibrations illustrated in Figure 3A, but these have been damped by the invented system; it is noticeable that within about three seconds the amplitude of the vibrations has been significantly reduced. The damping achieved is more than satisfactory for the purposes of the technical problem to be solved.

## Claims

1. A system to improve electrical collection by pantographs on an electromotive train from the contact cable (3) held by the carrying cable (2) in which the train is equipped with a first pantograph and a second pantograph at a distance from one another, the system comprising at least one vibration damper (6), fitted with one end to the carrying cable into each span (1) of the electric railway line, suspended off said carrying cable (2) about the middle of the span in order to damp said vibrations along the full length of said span in the time between the passage of the first pantograph and that of the second pantograph under any point of said span **characterized** in that said vibration damper (6) comprises a cylindrical case (14) full of a fluid, a piston (7) running within said case, a counter-acting spring (23) within said case, between said piston and a circular wall of said case, a weight (20) fitted to the external end of the rod (19) of said piston (17), a valve (22) inside said piston (17) so built as to offer different resistances to the through passage of said fluid depending on the piston (17) running towards the head or towards the bottom of said case.

2. A system according to claim 1 characterized in that said counter-acting spring (23) is located within said piston and the bottom of said case and said valve (22) is so built as to offer to the through passage of said fluid low or high resistance depending on she piston (17) running, respectively, towards the head or the bottom of said case.

3. A system according to claim 1 characterized in that said couter-acting spring (23) is located with the ends respectively fixed to the upper surface of the piston and to the upper wall of said case and said valve (22) is so built as to offer to the through passage of the fluid high or low resistance depending on the piston (17) running, respectively, towards the head or the bottom of said case.

4. A system according to claim 1 characterized in that said valve (22) is so built as to offer the same resistance to the through passage of said fluid whatever the direction in which said piston (17) runs within said case, irrespective of the location of the counter-acting spring (23) into said case.

## Patentansprüche

1. System zum Verbessern der elektrischen Stromabnahme an Stromabnehmern eines elektrisch angetriebenen Zuges von dem von einem Tragkabel (2) getragenen Schleifdraht (3), wobei der Zug mit einem ersten Stromabnehmer und in einem zweiten Stromabnehmer in einem Abstand voneinander ausgerüstet ist, wobei das System mindestens einen Schwingungsdämpfer (6) umfaßt, der mit einem Ende an dem Tragkabel in jeder Freispannstrecke (1) der elektrischen Eisenbahnleitung befestigt und von dem Tragkabel (2) etwa in der Mitte der Freispannstrecke aufgehängt ist, um die Dämpfungen längs der gesamten Länge der Freispannstrecke in der Zeit zwischen den Durchgängen des ersten Stromabnehmers und des zweiten Stromabnehmers unter jedem Punkt der Freispannstrecke zu dämpfen,
dadurch **gekennzeichnet**, daß der Schwingungsdämpfer (2) ein mit einem Fluid gefülltes zylindrisches Gehäuse (14), einen in dem Gehäuse laufenden Kolben (7), eine Gegenkraftfeder (23) in dem Gehäuse zwischen dem Kolben und einer kreisförmigen Wand des Gehäuses, ein am äußeren Ende der Stange (19) des Kolbens (17) befestigtes Gewicht (20) und ein Ventil (22) in dem Kolben (17) aufweist, welches so ausgebildet ist, daß es verschiedene Durchlaßwiderstände für das Fluid abhängig von der Bewegung des Kolbens (17) zum oberen oder unteren Ende des Gehäuses aufweist.

2. System nach Anspruch 1,
dadurch **gekennzeichnet**, daß die Gegenkraftfeder (22) zwischen dem Kolben und dem Boden des Gehäuses angeordnet ist und daß das Ventil (22) so ausgebildet ist, daß es dem Durchlaß des Fluids einen niedrigen bzw. hohen Widerstand entgegensetzt, je nachdem ob der Kolben (17) sich zum oberen Ende oder zum Boden des Gehäuses bewegt.

3. System nach Anspruch 1,
dadurch **gekennzeichnet**, daß die Gegenkraftfeder (23) mit ihren Enden an der oberen Seite des Kolbens und an der oberen Wand des Gehäuses befestigt ist und daß das Ventil (22) so ausgebildet ist, daß es dem Durchgang des Fluids einen hohen bzw. niedrigen Widerstand entgegensetzt, je nachdem ob sich der Kolben (17) zum oberen Ende oder zum Boden des Gehäuses bewegt.

4. System nach Anspruch 1,
dadurch **gekennzeichnet**, daß das Ventil (22) so ausgebildet ist, daß es dem Durchgang des Fluids den gleichen Widerstand entgegensetzt, gleichgültig in welcher Richtung sich der Kolben (17) in dem Gehäuse bewegt, unabhängig von der Anordnung der Gegenkraftfeder (23) in dem Gehäuse.

## Revendications

1. Système pour améliorer le captage de courant électrique par les pantographes d'un train à traction électrique, à partir du câble de contact (3) maintenu par le câble porteur (2), dans lequel le train est équipé d'un premier pantographe et d'un second pantographe à une certaine distance l'un de l'autre, le système comprenant au moins un amortisseur de vibrations (6) fixé par une extrémité au câble porteur dans chaque portée (1) de la ligne électrique de chemin de fer, et suspendu à ce câble porteur (2) au voisinage du milieu de la portée pour amortir les vibrations sur toute la longueur de cette portée dans l'intervalle de temps compris entre le passage du premier pantographe et le passage du second pantographe sous un point quelconque de la portée,
caractérisé en ce que
l'amortisseur de vibrations (6) comprend un boîtier cylindrique (14) rempli d'un fluide, un piston (17) se déplaçant à l'intérieur de ce boîtier, un ressort antagoniste (23) placé dans le boîtier entre le piston et la paroi circulaire du boîtier, un poids (20) fixé à l'extrémité extérieure de la tige (19) du piston (17), une soupape (22) montée à l'intérieur du piston (17) et construite de manière à offrir des résistances différentes au passage du fluide à travers celle-ci suivant que le piston (17) se déplace vers la tête ou vers le fond du boîtier.

2. Système selon la revendication 1,
caractérisé en ce que
le ressort antagoniste (23) est placé à l'intérieur du piston et du fond du boîtier, et la soupape (22) est construite de manière à offrir au passage du fluide à travers celle-ci, une résistance faible ou élevée suivant que le piston (17) se déplace respectivement vers la tête ou vers le fond du boîtier.

3. Système selon la revendication 1,
caractérisé en ce que
le ressort antagoniste (23) est placé de façon que ses extrémités sont respectivement fixées à la surface supérieure du piston et à la paroi supérieure du boîtier, et la soupape (22) est construite de manière à offrir au passage du fluide à travers celle-ci, une résistance élevée ou faible suivant que le piston (17) se déplace respectivement vers la tête ou vers le fond du boîtier.

4. Système selon la revendication 1,
caractérisé en ce que
la soupape (22) est construite de manière à offrir toujours la même résistance au passage du fluide à travers celle-ci, quel que soit le sens de déplacement du piston (17) à l'intérieur du boîtier, indépendamment de l'emplacement du ressort antagoniste (23) dans ce boîtier.
